# EUROPEAN PATENT APPLICATION

(11) **EP 1 306 999 A2**
(43) Date of publication of application: **02.05.2003**
(21) Application number: 02024432.3
(22) Date of filing: 29.10.2002
(51) Int. Cl.: H04L 7/033

(54) **Data extraction circuit used for serial transmission of data signals between communication devices having different clock signal sources**

(30) Priority: 29.10.2001 JP 2001331295
(71) Applicant: Kabushiki Kaisha Toshiba, Tokyo (JP)
(72) Inventor: Takada, Shuichi, Intellectual Property Division, Minato-ku, Tokyo 105-8001 (JP)
(74) Representative: HOFFMANN - EITLE

(57) **Abstract**

A data extraction circuit includes a determination circuit (10) which determines a sampling clock which is optimum for reproduction of reception data supplied from the exterior based on phase information of multi-phase clocks (CK1 to CKn) corresponding to an edge of the reception data. Further, the data extraction circuit includes a selection circuit (20) which selects one clock which is optimum for reproduction of the reception data according to the multi-phase clocks (CK1 to CKn) based on the result of determination in the determination circuit (10). In addition, the data extraction circuit includes a reproduction circuit (30) which reproduces the reception data according to the one optimum clock selected by the selection circuit (20).

## Description

This invention relates to a data extraction circuit and more particularly to a data extraction circuit used for serial transmission of data signals between communication devices having different clock signal sources.

Recently, as mobile devices or the like are more popularized, serial transmission of data signals is more actively performed. Particularly, serial transmission of data signals is more actively performed between communication devices having different clock signal sources.

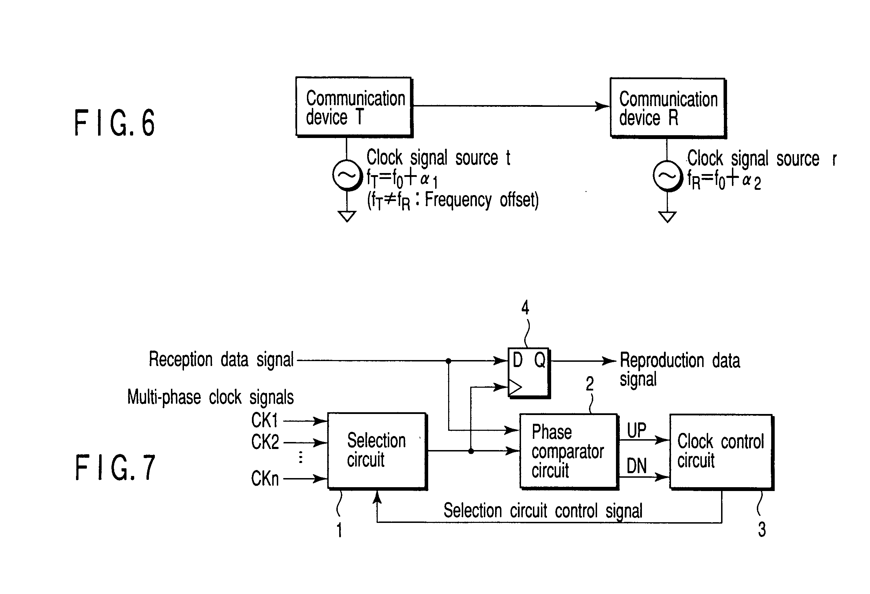

FIG. 6 shows a case wherein serial transmission of data signals is performed between communication devices having different clock signal sources. As shown in FIG. 6, only a data signal is transmitted/received by serial transmission between communication devices T, R respectively having different clock signal sources t, r. That is, in the case of an asynchronous system using no clock, clocks with the same frequency are created in a transmitter (in this example, communication device T) which transmits a data signal and a receiver (in this example, communication device R) which receives the data signal.

However, in the communication devices T and R, frequency offsets (f_{T} ≠ f_{R}) will always occur due to slight deviations (α₁, α₂) in frequencies f_{T}, f_{R}. Therefore, in the conventional case, a sampling clock signal which is synchronized with a data signal received (which is hereinafter referred to as a reception data signal) is generated on the receiver side. Then, the reception data signal is sampled based on the sampling clock signal. By performing the above operation, a reproduction data signal is obtained.

There are various types of circuits which generate the above sampling clock signal. A method which uses one of the above circuits and utilizes multi-phase clock signals is provided.

FIG. 7 shows an example of the configuration of a data extraction circuit which reproduces (extracts a reproduction data signal) a reception data signal by utilizing the multi-phase clock signals. The data extraction circuit includes a selection circuit 1, phase comparator circuit 2, clock control circuit 3 and sampling circuit (F/F) 4.

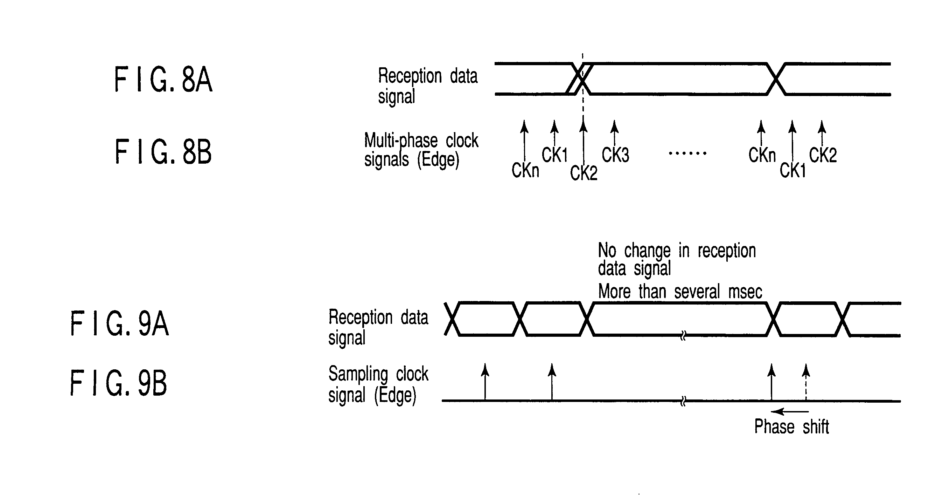

In the data extraction circuit, for example, as shown in FIGS. 8A and 8B, a sampling clock signal which is optimum for reproduction of the reception data signal is selected. That is, the selection circuit 1 selects one clock signal from multi-phase clock signals CK1 to CKn generated from a PLL circuit (not shown). The operation of selecting the clock signal is performed based on a selection circuit control signal from the clock control circuit 3. The phase comparator circuit 2 compares the rise edge (or fall edge) of the reception data signal with a phase of the clock signal selected by the selection circuit 1 to the edge thereof. Then, based on the result of comparison, it outputs a control signal UP/DN to control the clock control circuit 3. The clock control circuit 3 creates a selection circuit control signal according to the control signal UP/DN and outputs (feeds back) the same to the selection circuit 1. Thus, the above feedback control operation is repeatedly performed until a sampling clock signal which is optimum for reproduction of the reception data signal is obtained. Then, the sampling circuit 4 samples the reception data signal to extract a reproduction data signal by use of the finally selected optimum sampling clock signal.

In the case of the data extraction circuit, operations of at least n/2 times are necessary to obtain an optimum sampling clock signal.

In the newest mobile devices or the like, transmission of the data signal at the standby time is interrupted in order to reduce standby electric power. When such a system is used, for example, as shown in FIGS. 9A and 9B, the phase relation between the reception data signal and the sampling clock signal is shifted in some cases by an influence of the frequency offset at the re-starting time of transmission of the data signal. Therefore, in the data extraction circuit with the above configuration, the operation for phase synchronization is required again. In addition, in the worst case, it becomes impossible to extract a reproduction data signal based on the reception data signal.

As described above, in the conventional case, it takes a bit long time to select and obtain an optimum sampling clock signal from the multi-phase clock signals. Therefore, at the re-starting time of transmission of a data signal, there occurs a problem that the operation of sampling the reception data signal cannot be immediately started.

A data extraction circuit according to one embodiment of the present invention comprises a determination circuit which determines a sampling clock which is optimum for reproduction of reception data supplied from the exterior based on phase information of multi-phase clocks corresponding to an edge of the reception data, a selection circuit which selects one clock which is optimum for reproduction of the reception data from the multi-phase clocks based on the result of determination in the determination circuit, and a reproduction circuit which reproduces the reception data according to the one optimum clock selected by the selection circuit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing an example of the configuration of a data extraction circuit according to one embodiment of the present invention;
FIG. 2 is a circuit diagram more concretely showing the configuration of the data extraction circuit shown in FIG. 1;
FIGS. 3A to 3E are timing charts for illustrating the clock selection operation of the data extraction circuit;
FIG. 4 is a circuit diagram showing an example of the configuration of a data extraction circuit according to another embodiment of the present invention;
FIG. 5 is a circuit diagram showing another example of the configuration of a clock selection circuit of the data extraction circuit;
FIG. 6 is a configuration diagram showing a case wherein serial transmission of data signals is performed between communication devices respectively having different clock signal sources, for illustrating the conventional technique and the problem thereof;
FIG. 7 is a block diagram showing the configuration of the conventional data extraction circuit used in the communication device shown in FIG. 6;
FIGS. 8A and 8B are timing charts for illustrating the clock selection operation of the data extraction circuit shown in FIG. 7; and
FIGS. 9A and 9B are timing charts for illustrating a phase shift occurring in the sampling clock signal at the re-starting time of transmission of a data signal.

There will now be described embodiments of this invention with reference to the accompanying drawings.

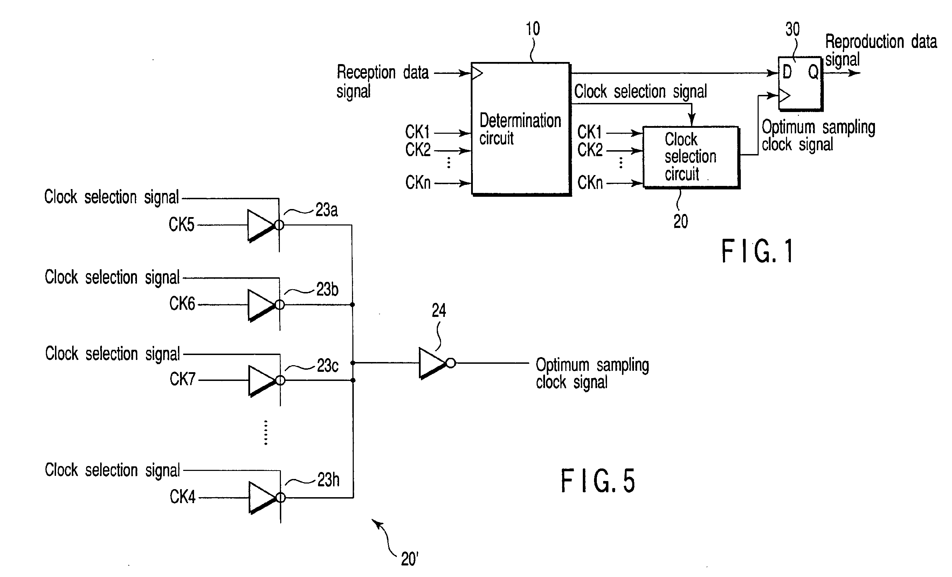

FIG. 1 shows an example of the configuration of a data extraction circuit according to one embodiment of the present invention. In this case, a case wherein the data extraction circuit is used for serial transmission of data signals between the communication devices T, R respectively having different clock signal sources t, r as shown in FIG. 6, for example, is explained.

As shown in FIG. 1, the data extraction circuit includes a determination circuit 10, a clock selection circuit 20 and a sampling circuit (reproduction circuit) 30 configured by a flip-flop (F/F) circuit.

For example, as shown in FIG. 6, a data signal (reception data signal) received by the communication device R is supplied to the determination circuit 10. In this case, the reception data signal is transmitted from the external communication device T based on a serial transmission system. Further, multi-phase clock signals CK1 to CKn created by a PLL circuit (not shown) in the communication device R are supplied to the determination circuit 10. The determination circuit 10 samples the multi-phase clock signals CK1 to CKn in response to the rise edge or fall edge of the reception data signal. Then, it determines a sampling clock signal (optimum clock signal) which is optimum for reproduction of the reception data signal based on the sampling state (phase information). In addition, the determination circuit 10 outputs a clock selection signal obtained as the result of determination to the clock selection circuit 20. The concrete determining method in the determination circuit 10 will be explained later.

A clock selection signal from the determination circuit 10 is supplied to the clock selection circuit 20. Further, the clock selection circuit 20 is supplied with the multi-phase clock signals CK1 to CKn. The clock selection circuit 20 selects one clock signal from the multi-phase clock signals CK1 to CKn according to the clock selection signal from the determination circuit 10. Then, it outputs the clock signal as an optimum sampling clock signal to the sampling circuit 30.

The optimum sampling clock signal from the clock selection circuit 20 is supplied to the sampling circuit 30. Further, the reception data signal is supplied to the sampling circuit 30. The sampling circuit 30 samples the reception data signal based on the optimum sampling clock signal. Thus, a reproduction data signal is extracted from the reception data signal.

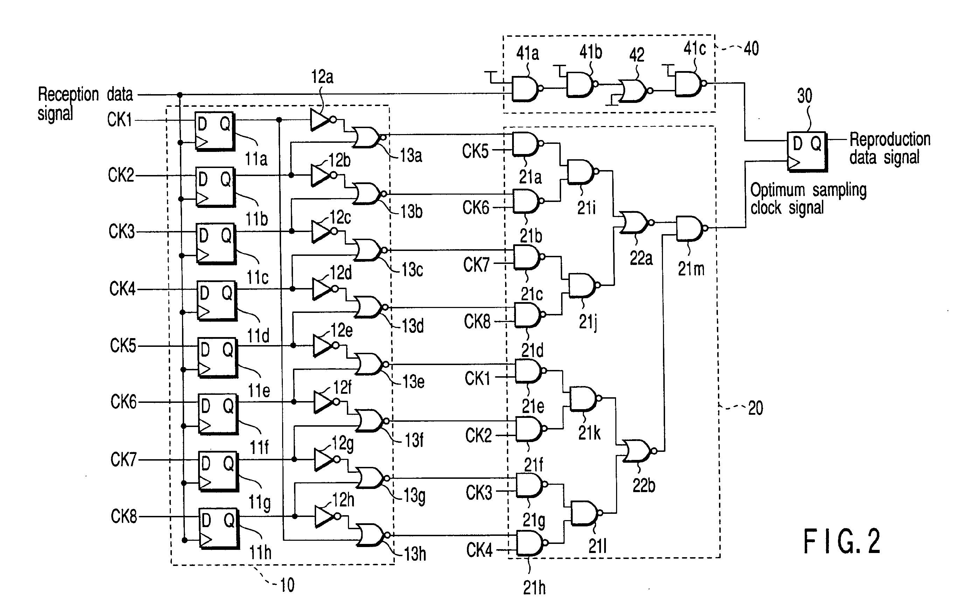

FIG. 2 more concretely shows the configuration of the data extraction circuit. In this example, a case wherein the number (n) of multi-phase clock signals CK1 to CKn is set at "8" is explained. Further, in this case, an example in which the multi-phase clock signal CK6 whose phase is shifted by 180 degrees in phase with respect to the multi-phase clock signal CK2 is used as the optimum sampling clock signal is explained.

As shown in FIG. 2, the determination circuit 10 includes flip-flop (F/F) circuits 11a to 11h, NOT circuits (inverters) 12a to 12h and OR circuits 13a to 13h. More specifically, the reception data signal is commonly input to one-side input terminals of the F/F circuits 11a to 11h. Further, the multi-phase clock signals CK1 to CK8 are respectively input to the other input terminals (data input terminals D) of the F/F circuits 11a to 11h.

For example, the output terminal (output terminal Q) of the F/F circuit 11a is connected to the input terminal of the inverter 12a. The output terminal of the inverter 12a is connected to one input terminal of the OR circuit 13a.

The output terminal of the F/F circuit 11b is connected to the other input terminal of the OR circuit 13a. Further, the output terminal of the F/F circuit 11b is connected to the input terminal of the inverter 12b. The output terminal of the inverter 12b is connected to one input terminal of the OR circuit 13b.

The output terminal of the F/F circuit 11c is connected to the other input terminal of the OR circuit 13b. Further, the output terminal of the F/F circuit 11c is connected to the input terminal of the inverter 12c. The output terminal of the inverter 12c is connected to one input terminal of the OR circuit 13c.

The output terminal of the F/F circuit 11d is connected to the other input terminal of the OR circuit 13c. Further, the output terminal of the F/F circuit 11d is connected to the input terminal of the inverter 12d. The output terminal of the inverter 12d is connected to one input terminal of the OR circuit 13d.

The output terminal of the F/F circuit 11e is connected to the other input terminal of the OR circuit 13d. Further, the output terminal of the F/F circuit 11e is connected to the input terminal of the inverter 12e. The output terminal of the inverter 12e is connected to one input terminal of the OR circuit 13e.

The output terminal of the F/F circuit 11f is connected to the other input terminal of the OR circuit 13e. Further, the output terminal of the F/F circuit 11f is connected to the input terminal of the inverter 12f. The output terminal of the inverter 12f is connected to one input terminal of the OR circuit 13f.

The output terminal of the F/F circuit 11g is connected to the other input terminal of the OR circuit 13f. Further, the output terminal of the F/F circuit 11g is connected to the input terminal of the inverter 12g. The output terminal of the inverter 12g is connected to one input terminal of the OR circuit 13g.

The output terminal of the F/F circuit 11h is connected to the other input terminal of the OR circuit 13g. Further, the output terminal of the F/F circuit 11h is connected to the input terminal of the inverter 12h. The output terminal of the inverter 12h is connected to one input terminal of the OR circuit 13h. The output terminal of the F/F circuit 11a is connected to the other input terminal of the OR circuit 13h.

The clock selection circuit 20 includes NAND circuits 21a to 21m and OR circuits 22a, 22b. More specifically, the output terminal of the OR circuit 13a in the determination circuit 10 is connected to one input terminal of the NAND circuit 21a. Further, the other input terminal of the NAND circuit 21a is supplied with the multi-phase clock signal CK5, for example.

The output terminal of the OR circuit 13b is connected to one input terminal of the NAND circuit 21b. Further, the other input terminal of the NAND circuit 21b is supplied with the multi-phase clock signal CK6, for example.

The output terminal of the OR circuit 13c is connected to one input terminal of the NAND circuit 21c. Further, the other input terminal of the NAND circuit 21c is supplied with the multi-phase clock signal CK7, for example.

The output terminal of the OR circuit 13d is connected to one input terminal of the NAND circuit 21d. Further, the other input terminal of the NAND circuit 21d is supplied with the multi-phase clock signal CK8, for example.

The output terminal of the OR circuit 13e is connected to one input terminal of the NAND circuit 21e. Further, the other input terminal of the NAND circuit 21e is supplied with the multi-phase clock signal CK1, for example.

The output terminal of the OR circuit 13f is connected to one input terminal of the NAND circuit 21f. Further, the other input terminal of the NAND circuit 21f is supplied with the multi-phase clock signal CK2, for example.

The output terminal of the OR circuit 13g is connected to one input terminal of the NAND circuit 21g. Further, the other input terminal of the NAND circuit 21g is supplied with the multi-phase clock signal CK3, for example.

The output terminal of the OR circuit 13h is connected to one input terminal of the NAND circuit 21h. Further, the other input terminal of the NAND circuit 21h is supplied with the multi-phase clock signal CK4, for example.

The output terminal of the NAND circuit 21a is connected to one input terminal of the NAND circuit 21i. Further, the other input terminal of the NAND circuit 21i is connected to the output terminal of the NAND circuit 21b.

The output terminal of the NAND circuit 21c is connected to one input terminal of the NAND circuit 21j. Further, the other input terminal of the NAND circuit 21j is connected to the output terminal of the NAND circuit 21d.

The output terminal of the NAND circuit 21e is connected to one input terminal of the NAND circuit 21k. Further, the other input terminal of the NAND circuit 21k is connected to the output terminal of the NAND circuit 21f.

The output terminal of the NAND circuit 21g is connected to one input terminal of the NAND circuit 211. Further, the other input terminal of the NAND circuit 211 is connected to the output terminal of the NAND circuit 21h.

The output terminal of the NAND circuit 21i is connected to one input terminal of the OR circuit 22a. Further, the other input terminal of the OR circuit 22a is connected to the output terminal of the NAND circuit 21j.

The output terminal of the NAND circuit 21k is connected to one input terminal of the OR circuit 22b. Further, the other input terminal of the OR circuit 22b is connected to the output terminal of the NAND circuit 211.

The output terminal of the OR circuit 22a is connected to one input terminal of the NAND circuit 21m. Further, the output terminal of the OR circuit 22b is connected to the other input terminal of the NAND circuit 21m.

The output terminal of the NAND circuit 21m is connected to the other input terminal of the F/F circuit which configures the sampling circuit 30. One input terminal (data input terminal D) of the above F/F circuit is supplied with the reception data signal via a delay circuit 40. Further, a reproduction data signal extracted from the reception data signal is output from the output terminal (output terminal Q) of the above F/F circuit.

The delay circuit 40 is used to delay the reception data signal according to time required for selecting the optimum sampling clock signal in the clock selection circuit 20.

For example, the delay circuit 40 has a configuration obtained by serially connecting logic circuits of a number which is the same as the number of stages (in this example, four stages) of logic circuits in the clock selection circuit 20. That is, the delay circuit 40 includes a NAND circuit 41a having one input terminal supplied with the reception data signal. Further, it includes a NAND circuit 41b having one input terminal connected to the output terminal of the NAND circuit 41a. The delay circuit 40 further includes an OR circuit 42 having one input terminal connected to the output terminal of the NAND circuit 41b. In addition, it includes a NAND circuit 41c having one input terminal connected to the output terminal of the OR circuit 42. The output terminal of the NAND circuit 41c is connected to the data input terminal D of the F/F circuit.

The other input terminals of the NAND circuits 41a, 41b, 41c and OR circuit 42 are supplied with a reference signal. The delay circuit 40 with the above configuration can be provided in the determination circuit 10, for example.

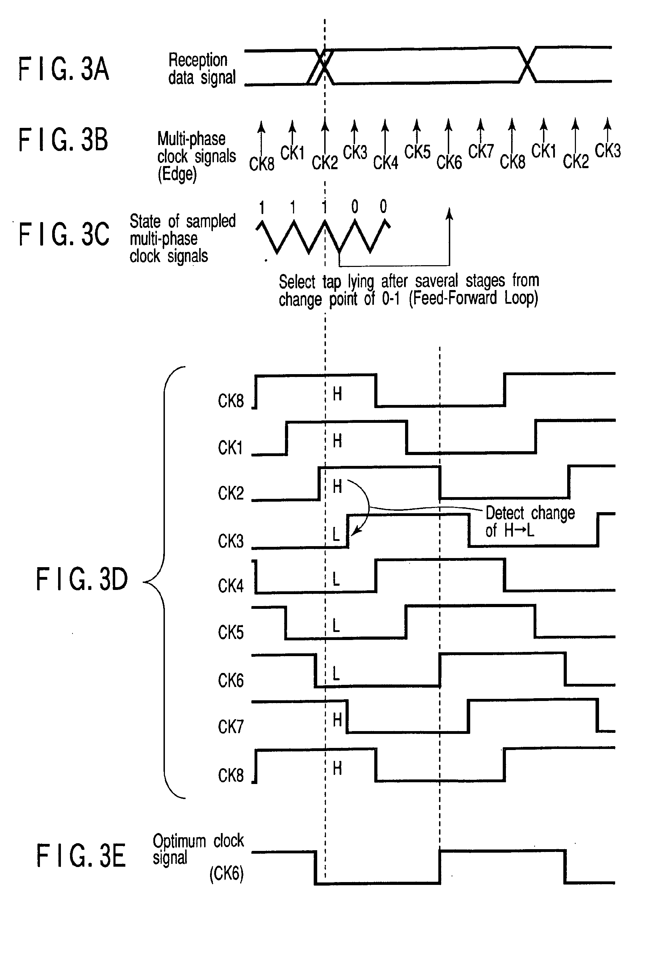

FIGS. 3A to 3E illustrate the operation for selecting the optimum sampling clock signal in the data extraction circuit with the above configuration. In this case, the operation performed in response to the first rise edge of the reception data signal is explained.

As shown in FIGS. 3A to 3E, for example, assume that the reception data signal and multi-phase clock signals CK1 to CK8 are received by the determination circuit 10. Then, the determination circuit 10 detects a change from the high level (H) to the low level (L) of the multi-phase clock signals CK1 to CK8 at timing corresponding to the rise edge of the reception data signal. In the case of this example, a change from the high-level multi-phase clock signal CK2 to the low-level multi-phase clock signal CK3 is detected. As a result, a state in which only the output of the OR circuit 13b among the outputs of the OR circuits 13a to 13h is set at the high level is obtained.

That is, in this example, a multi-phase clock signal occurring after several taps from the multi-phase clock signal CK2, for example, the multi-phase clock signal (inverted signal) CK6 which is shifted by 180 degrees in phase with respect to the multi-phase clock signal CK2 is consequently determined as the optimum sampling clock signal. Therefore, a clock selection signal set in a state in which only the output of the OR circuit 13b among the outputs of the OR circuits 13a to 13h is set at the high level is output from the determination circuit 10.

On the other hand, the clock selection circuit 20 is set in a state in which only the output of the NAND circuit 21b among the outputs of the NAND circuits 21a to 21h is set at the high level in response to the clock selection signal from the determination circuit 10. As a result, the multi-phase clock signal CK6 is output from the clock selection circuit 20 to the sampling circuit 30.

The sampling circuit 30 samples the reception data signal supplied from the delay circuit 40 in synchronism with supply of the multi-phase clock signal CK6. Thus, a reproduction data signal can be extracted.

With the configuration described above, a sampling clock which is optimum for reproduction of the reception data signal can be determined based on the phase of the multi-phase clock signals sampled in response to the edge of the reception data signal. As a result, an optimum sampling clock signal can be acquired within one clock (one reception data signal) from the first rise edge of the reception data signal. At this time, the reproduction data signal can be immediately extracted. Therefore, at the re-starting time of transmission of the data signal, reproduction of the reception data signal can be started at substantially the same time as selection of the optimum sampling clock signal.

### (Other Embodiments)

The above data extraction circuit can be configured to avoid the rapid clock selection operation by taking an influence by jitters or the like into consideration.

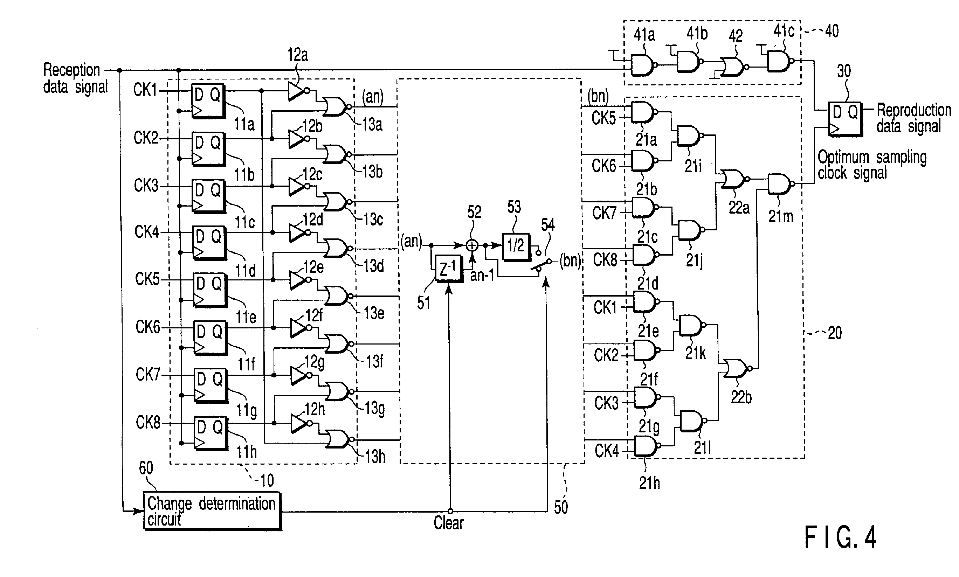

FIG. 4 shows an example of a data extraction circuit configured to avoid the rapid clock selection operation as a data extraction circuit according to another embodiment of the present invention. That is, the data extraction circuit is configured to have a digital filter 50 provided between a determination circuit 10 and a clock selection circuit 20.

In the case of this example, the digital filter 50 is configured to have a latch circuit 51, adder 52, 1/2 circuit 53 and switch 54. When the frequency deviation is large, the results (an) of determination in the determination circuit 10 are averaged at adequate timings by the digital filter 50. Therefore, it becomes possible to suppress a clock selection signal (bn) which is used to select an optimum sampling clock signal from rapidly changing and prevent switching of optimum sampling clock signals from being frequently made.

Further, the digital filter 50 is configured to clear the contents of the latch circuit 51 under control of a change determination circuit 60. The change determination circuit 60 detects a state such as a standby state in which a reception data signal is not changed by m times or more within a preset period of time. With the above configuration, it becomes possible to rapidly pull the operation into the control operation for the clock selection operation at the re-starting time of transmission of a data signal.

The clock selection circuit 20 is not limited to the configuration made by use of the NAND circuits 21a to 21m and OR circuits 22a, 22b as shown in FIGS. 2 and 4. For example, as shown in FIG. 5, a clock selection circuit 20' can be configured by use of clocked inverters 23a to 23h and inverter 24.

Further, the number (n) of multi-phase clock signals CK1 to CKn is not limited to that used in the above embodiment. Of course, it is possible to use signal other than the inverted signals of the multi-phase clock signals CK1 to CKn as optimum sampling clock signal.

## Claims

1. A data extraction circuit **characterized by** comprising a determination circuit (10) which determines a sampling clock which is optimum for reproduction of reception data supplied from the exterior based on phase information of multi-phase clocks (CK1 to CKn) corresponding to an edge of the reception data, a selection circuit (20) which selects one clock which is optimum for reproduction of the reception data from the multi-phase clocks (CK1 to CKn) based on the result of determination in the determination circuit (10), and a reproduction circuit (30) which reproduces the reception data according to the one optimum clock selected by the selection circuit (20).

2. The data extraction circuit according to claim 1, **characterized in that** the phase information indicates a change in level (H or L) of the multi-phase clocks (CK1 to CKn) at timing corresponding to the edge of the reception data and the determination circuit (10) detects a clock whose level (H or L) has been changed.

3. The data extraction circuit according to claim 2, **characterized in that** the selection circuit (20) selects a clock which is shifted by 180 degrees in phase with respect to the clock whose level (H or L) has been changed.

4. The data extraction circuit according to claim 1, **characterized by** further comprising a delay circuit (40) which is provided in a preceding stage of the reproduction circuit (30) to delay the reception data according to time required for selecting the clock in the selection circuit (20).

5. The data extraction circuit according to claim 4, **characterized in that** the delay circuit (40) is configured by logic circuits (41a, 41b, 41c and 42) having the same number of stages as that of logic circuits in the selection circuit (20).

6. The data extraction circuit according to claim 1, **characterized by** further comprising a filter circuit (50) which is provided in a preceding stage of the selection circuit (20) to average the results (an) of determination in the determination circuit (10).

7. The data extraction circuit according to claim 6, **characterized in that** the filter circuit (50) includes a latch circuit (51) which latches the result (an) of determination in the determination circuit (10) and the contents of the latch circuit (51) are cleared under control of a change determination circuit (60).

8. The data extraction circuit according to claim 7, **characterized in that** the change determination circuit (60) detects a state in which the reception data is not changed by not less than m times within a preset period of time.

9. A data extraction circuit **characterized by** comprising a determination circuit (10) which determines a sampling clock which is optimum for reproduction of reception data supplied from the exterior based on changes in levels (H or L) of multi-phase clocks (CK1 to CKn) at timing corresponding to an edge of the reception data, the determination circuit (10) detecting a clock whose level has been changed, a selection circuit (20) which selects one clock which is optimum for reproduction of the reception data according to the multi-phase clocks (CK1 to CKn) based on the result of determination in the determination circuit (10), the selection circuit (20) selecting a clock which is shifted by 180 degrees in phase with respect to the clock whose level (H or L) has been changed, and a reproduction circuit (30) which reproduces the reception data according to the one optimum clock selected by the selection circuit (20).

10. The data extraction circuit according to claim 9, **characterized by** further comprising a delay circuit (40) which is provided in a preceding stage of the reproduction circuit (30) to delay the reception data according to time required for selecting the clock in the selection circuit (20).

11. The data extraction circuit according to claim 10, **characterized in that** the delay circuit (40) is configured by logic circuits (41a, 41b, 41c and 42) having the same number of stages as that of logic circuits in the selection circuit (20).

12. The data extraction circuit according to claim 9, **characterized by** further comprising a filter circuit (50) which is provided in a preceding stage of the selection circuit (20) to average the results (an) of determination in the determination circuit (10).

13. The data extraction circuit according to claim 12, **characterized in that** the filter circuit (50) includes a latch circuit (51) which latches the result (an) of determination in the determination circuit (10) and the contents of the latch circuit (51) are cleared under control of a change determination circuit (60).

14. The data extraction circuit according to claim 13, **characterized in that** the change determination circuit (60) detects a state in which the reception data is not changed by not less than m times within a preset period of time.
